# EUROPÄISCHE PATENTSCHRIFT

(11) **EP 1 216 126 B1**
(45) Veröffentlichungstag und Bekanntmachung des Hinweises auf die Patenterteilung: **18.06.2003**
(21) Anmeldenummer: 00962241.6
(22) Anmeldetag: 23.08.2000
(51) Int. Cl.: B29C 33/36, B29C 49/00

(54) **VORRICHTUNG ZUM HERSTELLEN VON ROHREN MIT QUERPROFILIERTER WANDUNG**
DEVICE FOR PRODUCTION OF TUBES WITH TRANSVERSE WALLS
DISPOSITIF PERMETTANT DE FABRIQUER DES TUBES A PAROIS PROFILEES TRANSVERSALEMENT

(30) Priorität: 29.09.1999 DE 19946571
(43) Veröffentlichungstag der Anmeldung: 26.06.2002
(73) Patentinhaber: UNICOR GmbH Rahn Plastmaschinen, D-97437 Hassfurt (DE)
(72) Erfinder: NEUBAUER, Gerhard, D-97486 Königsberg (DE); NEUBERTH, Edwin, D-96191 Trunstadt (DE)
(74) Vertreter: LOUIS- PÖHLAU- LOHRENTZ
(86) Internationale Anmeldenummer: DE0002885
(87) Internationale Veröffentlichungsnummer: WO01023159

(56) Entgegenhaltungen:
- EP-A- 0 048 113
- DE-A- 19 914 974
- DE-U- 20 007 270
- US-A- 3 430 292
- US-A- 3 881 851

## Beschreibung

Die Erfindung betrifft eine Vorrichtung zum Herstellen von Rohren mit querprofilierter Wandung, mit Formhälften, die sich entlang zweier in sich geschlossener Bahnen bewegen und eine gemeinsame Formstrecke und zwei Rückführstrecken bilden.

Derartige als Corrugatoren bezeichnete Vorrichtungen sind in einer Vielzahl Ausbildungen bekannt. Beispielsweise beschreibt die EP 0 270 694 B1 der Anmelderin eine solche als Shuttle-Corrugator bezeichnete Vorrichtung. Corrugatoren sind beispielsweise auch aus der WO 95/17 295 A1, aus der EP 0 048 113 A1, aus der EP 0 628 397 B1, aus der WO 91/06 419 A1 oder aus der DE 195 35 231 A1 bekannt.

Weitere vergleichbare Vorrichtungen sind aus der US-A- 3 881 851 und aus der US-A- 3 430 292 zu entnehmen.

Mit solchen bekannten Vorrichtungen ist es möglich, Rohre mit querprofilierter Wandung und mit einer Anschlußmuffe herzustellen, wenn der Anschlußmuffe entsprechende Formhälften vorgesehen sind.

Bei Corrugatoren mit Formhälften, die in zwei geschlossenen Ketten vorgesehen sind, bestimmt die Kettenlänge die Rohrstücklänge, nach der jeweils eine Anschlußmuffe produziert wird.

Bei Shuttle-Corrugatoren, bei welchen die Formhälften nicht entlang zweier geschlossener Ketten umlaufen, ergeben sich mehrere Möglichkeiten, um Rohre mit Muffen herzustellen. Nachdem der Rücklauf der Formhälften entlang den beiden Rückführstrecken normalerweise schneller vonstatten geht als die eigentliche Rohr-Produktionsgeschwindigkeit, d.h. als die Vorschubgeschwindigkeit der Formhälften entlang der gemeinsamen Formstrecke, funktioniert ein Shuttle-Corrugator - wie ohne weiteres klar ist - so lange, so lange zumindest die Formstrecke mit Formhälften gefüllt ist. Soll nun an einer beliebigen Stelle des Rohres eine Muffe realisiert werden, d.h. sollen an einer beliebigen Stelle zwei Muffen-Formhälften eingefügt werden, so ist hierfür eine Parkstation erforderlich. Da es sich bei Shuttle-Corrugatoren normalerweise um Corrugatoren zur Herstellung von Rohren mit großen Nennweiten handelt, die 500 mm oder größer sein können, handelt es sich üblicherweise um großvolumige und folglich relativ schwergewichtige Formhälften, die geparkt und bewegt werden müssen. Dabei wird die jeweils geparkte Formhälfte in die Formstrecke, d.h. in die in sich geschlossene Bahn der jeweiligen Formhälften eingefahren, während die nicht mehr benötigte Formhälfte in die dann freigewordene Parkstation transportiert wird. Das heißt, daß erst die entsprechende Formhälfte in die Formstrecke eingefahren werden muß und daß danach die nicht mehr benötigte Formhälfte in die freigewordene Parkstation bewegt wird. Dieser Vorgang benötigt eine bestimmte Zeitspanne, was sich auf die Produktivität der Vorrichtung auswirkt, weil die Produktionsgeschwindigkeit einer solchen Vorrichtung durch diese Manipulation der Formhälften begrenzt ist.

In Kenntnis dieser Gegebenheiten liegt der Erfindung die Aufgabe zugrunde, eine Vorrichtung der eingangs genannten Art zu schaffen, bei welcher mit einer konstruktiv einfachen Ausbildung eine Erhöhung der Produktivität der Vorrichtung einhergeht

Diese Aufgabe wird bei einer Vorrichtung der eingangs genannten Art erfindungsgemäß dadurch gelöst, daß an den beiden Rückführstrecken jeweils eine Dreheinrichtung vorgesehen ist, an der sich mittels einer Halte- und Freigabeeinrichtung zwei Formhälften befinden. Dabei handelt es sich bei einer dieser beiden Formhälften um eine dem herzustellenden Rohr entsprechende Formhälfte und bei der zweiten Formhälfte vorzugsweise um eine Muffen-Formhälfte.

Mit Hilfe der erfindungsgemäßen Vorrichtung ist es mit hoher Produktivität möglich, Rohre mit querprofilierter Wandung und mit einer Inline-gefertigten Muffe herzustellen, wobei quasi jede beliebige Rohrlänge mit einer Muffe realisierbar ist. Durch die Anordnung zweier Formhälften an einer zugehörigen Dreheinrichtung ist es quasi verzögerungslos möglich, die eine oder die andere Formhälfte wunschgemäß in die zugehörige Formhälften-Bahn einzustellen, um querprofilierte Rohre mit Muffen zu produzieren. Ein weiterer Vorteil der erfindungsgemäßen Vorrichtung besteht darin, daß es auch steuerungstechnisch einfach ist, mit einer Dreheinrichtung zu arbeiten, weil der Produktionsablauf in der Vorrichtung, d.h. in der gemeinsamen Formstrecke der Formhälften durch das Ein- oder Auswechseln einer Muffenformhälfte in keiner Weise verzögert wird. Ein Anhalten der Formhälften in der jeweiligen Rückführstrecke ist nicht erforderlich.

Wie bereits erwähnt worden ist, ist es bevorzugt, wenn bei der erfindungsgemäßen Vorrichtung eine der an der jeweiligen Dreheinrichtung vorgesehenen Formhälften eine Muffenkontur aufweist, d.h. wenn es sich bei dieser Formhälfte um eine Muffen-Formhälfte der oben genannten Art handelt.

Die jeweilige Dreheinrichtung kann zweckmäßigerweise einen Drehteller aufweisen. Bei Verwendung eines Drehtellers ist die Halte- und Freigabeeinrichtung zweckmäßig derartigehen bzw. ausgebildet, daß während der Drehung des Drehtellers die beiden an ihm befindlichen Formhälften am Drehteller festgelegt, d.h. mit diesem verriegelt sind. In der jeweiligen Parkstellung des Drehtellers ist dann nurmehr die Formhälfte mit dem Drehteller verriegelt, die sich außerhalb der zugehörigen Rückführstrecke befindet, während die andere, in der Rückführstrecke befindliche Formhälfte freigegeben wird, um am Produktionsablauf teilzunehmen. Diese Funktionsweise der Halte- und Freigabeeinrichtung ist konstruktiv einfach automatisierbar.

Weitere Einzelheiten, Merkmale und Vorteile ergeben sich aus der nachfolgenden Beschreibung eines in der Zeichnung dargestellten Ausführungsbeispieles der erfindungsgemäßen Vorrichtung zur Herstellung von Rohren mit querprofilierter Wandung und mit einer Muffe. Es zeigen:
- Figur 1: in einer Draufsicht eine Hälfte der einen Shuttle-Corrugator bildenden Vorrichtung, und
- Figur 2: eine Ansicht der Dreheinrichtung der Vorrichtung gemäß Figur 1 in Blickrichtung des Pfeiles II, d.h. in einer Seitenansicht.

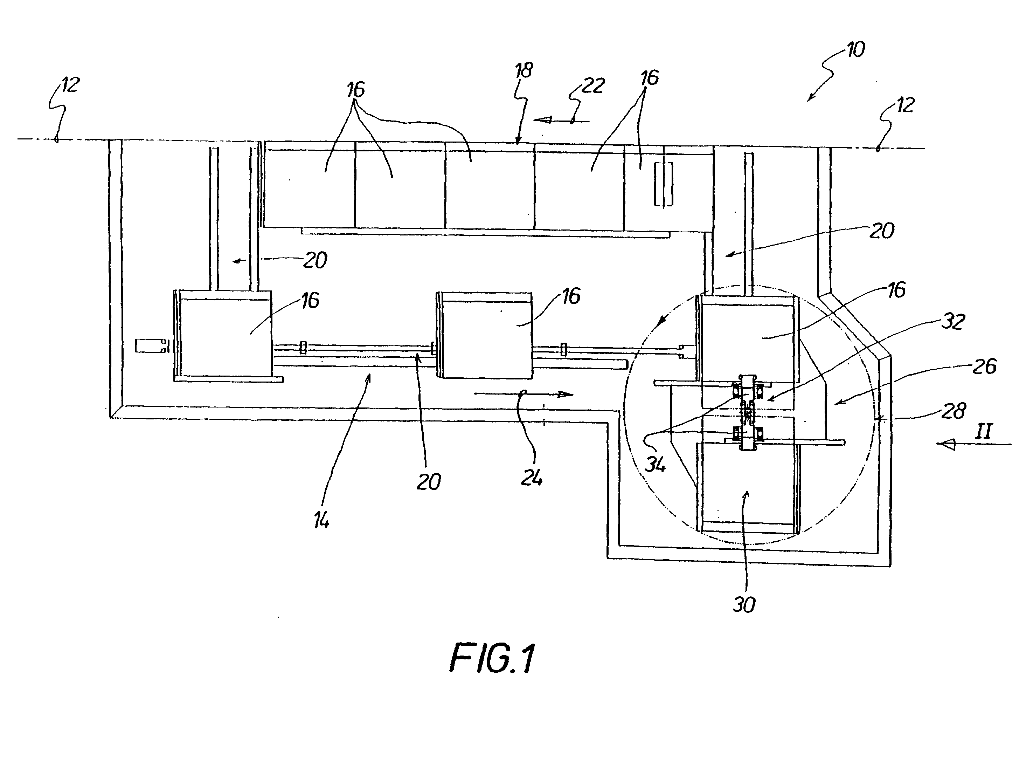

Figur 1 zeigt eine Hälfte einer als Shuttle-Corrugator ausgebildeten Vorrichtung 10, die zum Herstellen von Rohren mit einer querprofilierten Wandung und mit einer Anschlußmuffe vorgesehen ist. Dabei zeigt die Figur 1 nur eine Hälfte der Vorrichtung 10. Zu der in Figur 1 gezeichneten Hälfte ist zur strichpunktierten Linie 12 eine zweite Hälfte spiegelbildlich vorgesehen. Die Figur 1 zeigt also nur eine der beiden in sich geschlossenen Bahnen 14 der Vorrichtung 10, entlang welchen sich Formhälften 16 bewegen. Die beiden Bewegungsbahnen 14 der Formhälften 16 bilden entlang der strichpunktierten Linie 12 eine gemeinsame Formstrecke 18. Entlang der gemeinsamen Formstrecke 18 liegen die Formhälften 16 eng aneinander an. Entlang jeder der beiden Rückführstrecken 20 weisen die Formhälften 16 voneinander einen Abstand auf, was bedeutet, daß die Formhälften 16 entlang der jeweiligen Rückführstrecke 16 mit einer größeren Geschwindigkeit bewegt werden als entlang der gemeinsamen Formstrecke 18. Die Vorschubbewegung der Formhälften 16 entlang der gemeinsamen Formstrecke 18 (=Produktionsgeschwindigkeit) ist durch den Pfeil 22 verdeutlicht. Der Rücklauf der Formhälften 16 entlang der Rückführstrecke 20 ist durch den Pfeil 24 angedeutet.

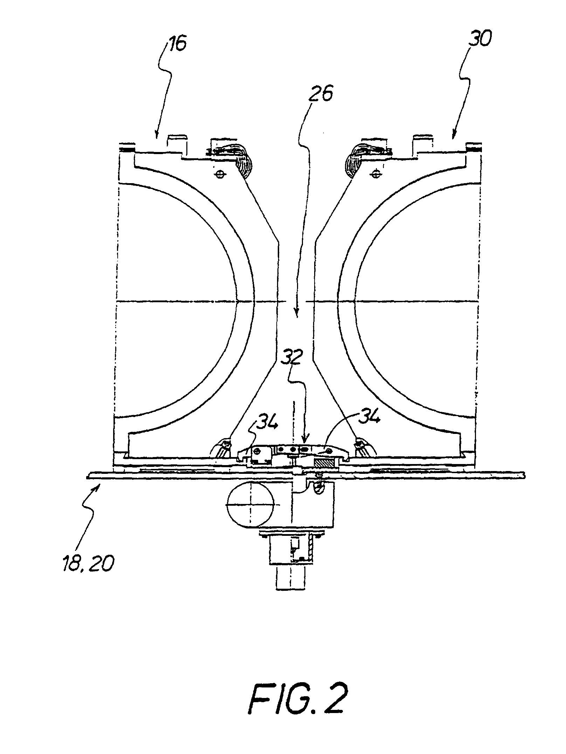

An jeder der beiden Rückführstrecken 20 - von welchen in Figur 1 nur eine dargestellt ist - ist eine Dreheinrichtung 26 vorgesehen, die einen etwa der in Figur 1 strichpunktiert angedeuteten Kreisfläche des Pfeils 28 entsprechenden Drehteller aufweisen kann. An der Dreheinrichtung 26 befindet sich eine Rohr-Formhälfte 16 und außerdem eine Muffen-Formhälfte 30, die mit Hilfe einer Halte- und Freigabeeinrichtung 32 an der Dreheinrichtung 26 loslösbar angebracht sind, wie auch aus Figur 2 ersichtlich ist. Bei der Formhälfte 30 handelt es sich - wie bereits erwähnt worden ist - um eine Muffen-Formhälfte. Wird die Rohr-Formhälfte 16 mit Hilfe der Dreheinrichtung 26 aus der Rückführstrecke 20 herausgeschwenkt und gleichzeitig die Muffen-Formhälfte 30 in die Rückführstrecke 20 eingeschwenkt, was durch den bogenförmigen Pfeil 34 angedeutet ist, so wird daran unmittelbar anschließend die Muffen-Formhälfte 30 in die gemeinsame Formstrecke 18 der Vorrichtung 10 transportiert, um ein querprofiliertes Rohr mit einer Muffe herzustellen.

Während der Verschwenkung der Dreheinrichtung 26 in Richtung des bogenförmigen Pfeiles 28 werden die beiden an der Dreheinrichtung 26 vorgesehenen Formhälften 16 und 30 mit Hilfe von Klauen 34 festgehalten. in der Parkstation wird dann nur die Formhälfte mit Hilfe der entsprechenden Klaue 34 fixiert, die sich außerhalb der Rückführstrecke 20 befindet. Die der Rückführstrecke 20 zugeordnete Klaue 34 wird automatisch von der Halteposition in die Freigabeposition verstellt, um die besagte Formhälfte 16 bzw. 30 in die Rückführstrecke 20 und von dort zur gemeinsamen Formstrecke 18 transportieren zu können.

## Patentansprüche

1. Vorrichtung zum Herstellen von Rohren mit querprofilierter Wandung, mit Formhälften (16, 30), die sich entlang zweier in sich geschlossener Bahnen (14) bewegen und eine gemeinsame Formstrecke (18) und zwei Rückführstrecken (20) bilden,
**dadurch gekennzeichnet,**
**daß** an den beiden Rückführstrecken (20) jeweils eine Dreheinrichtung (26) vorgesehen ist, an der sich mittels einer Halte- und Freigabeeinrichtung (32) zwei Formhälften (16, 30) befinden.

2. Vorrichtung nach Anspruch 1,
**dadurch gekennzeichnet,**
**daß** eine der an der jeweiligen Dreheinrichtung (26) vorgesehenen Formhälften (30) eine Muffenkontur aufweist.

3. Vorrichtung nach Anspruch 1 oder 2,
**dadurch gekennzeichnet,**
**daß** die jeweilige Dreheinrichtung (26) einen Drehteller aufweist.

## Claims

1. Apparatus for producing pipes with transversely profiled wall, having mould halves (16, 30) which move along two closed tracks (14) and form a common moulding section (18) and two return sections (20), **characterized in that** a turning device (26) at which two mould halves (16, 30) are located by means of a retaining and releasing device (32) is provided in each case at the two return sections (20).

2. Apparatus according to Claim 1, **characterized in that** one of the mould halves (30) provided at the respective turning device (26) has a socket contour.

3. Apparatus according to Claim 1 or 2, **characterized in that** the respective turning device (26) has a turntable.

## Revendications

1. Dispositif pour la fabrication de tubes à paroi profilée transversalement, comprenant des demi-moules (16, 30) qui se déplacent le long de deux voies (14) se refermant sur elles-mêmes en formant un trajet de moulage commun (18) et deux trajets de retour (20), **caractérisé en ce que** sur chacun des deux trajets de retour est prévu un système rotatif (26) sur lequel se trouvent deux demi-moules (16, 30) par l'intermédiaire d'un système d'arrêt et de libération (32).

2. Dispositif selon la revendication 1, **caractérisé en ce qu'**un des demi-moules (30) prévu sur chaque système rotatif (26) présente un contour en forme de coupelle.

3. Dispositif selon la revendication 1 ou 2, **caractérisé en ce que** chaque système rotatif (26) consiste en un plateau rotatif.
